# EUROPÄISCHE PATENTSCHRIFT

(11) **EP 1 447 582 B1**
(45) Veröffentlichungstag und Bekanntmachung des Hinweises auf die Patenterteilung: **12.04.2006**
(21) Anmeldenummer: 04002740.1
(22) Anmeldetag: 07.02.2004
(51) Int. Cl.: F16D 48/00

(54) **Verfahren zum Reduzieren von Rupfschwingungen im Antriebsstrang eines Fahrzeugs und Antriebsstrang**
Method for reducing juddering vibrations in a drive train of a motor vehicle and drive train
Chaîne de traction et procédé pour réduire des vibrations de grippage dans une chaîne de transmission d'un véhicule

(30) Priorität: 12.02.2003 DE 10305709
(43) Veröffentlichungstag der Anmeldung: 18.08.2004
(73) Patentinhaber: ZF Sachs AG, 97424 Schweinfurt (DE)
(72) Erfinder: Tebbe, Gerhard, Dipl.-Ing., 97505 Geldersheim (DE)

(56) Entgegenhaltungen:
- EP-A- 0 487 972
- DE-A- 10 006 284
- DE-A- 10 041 387
- DE-A- 10 117 745
- DE-A- 19 536 320
- GB-A- 847 191
- US-A- 4 791 829
- US-A- 5 062 517
- PATENT ABSTRACTS OF JAPAN Bd. 0072, Nr. 71 (M-260), 3. Dezember 1983 (1983-12-03) & JP 58 149431 A (MITSUBISHI DENKI KK), 5. September 1983 (1983-09-05)

## Beschreibung

Die vorliegende Erfindung betrifft zunächst ein Verfahren zum Reduzieren von Rupfschwingungen im Antriebsstrang eines Fahrzeugs gemäß dem Oberbegriff von Patentanspruch 9. Weiterhin betrifft die Erfindung einem Antriebsstrang für ein Fahrzeug gemäß dem Oberbegriff von Patentanspruch 1.

Das Auftreten von Rupfschwingungen, das üblicherweise als Rupfen bezeichnet wird, im Antriebsstrang eines Fahrzeugs ist ein bisher noch nicht abschließend gelöstes Problem, das insbesondere beim Anfahren von Fahrzeugen auftritt. Unter dem Begriff Rupfen werden dabei generell Schwingungen verstanden, die während der Gleitphase bzw. Schlupfphase einer Kupplung im Antrieb eines Fahrzeugs auftreten und die im Bereich der Kupplung erzeugt werden. Das Phänomen Rupfen wird insbesondere durch Schwankungen des Übertragungsmoments der Kupplung mit Rupffrequenz ausgelöst. Für das Rupfen sind verschiedene Ursachen bekannt. Rupfen entsteht beispielsweise dann, wenn bei einer schlupfenden Kupplung periodische Wechseldrehmomente erzeugt werden, die im Eigenfrequenzbereich des durch die Kupplung dynamisch getrennten Antriebsstrangs liegen. Die Antriebsräder des Fahrzeugs wandeln die Drehschwingungen des Antriebsstrangs in eine Längsschwingung des Fahrzeugs um. Das Rupfen macht sich folglich als Schwingung in Längsrichtung des Fahrzeugs bemerkbar und wird über die unterschiedlichen Fahrzeugbauteile auf den Fahrer übertragen. Der Fahrer des Fahrzeugs wird das Rupfen als unangenehme Vibrationen und Schwingungen empfinden, die zusätzlich noch mit einer gewissen Geräuschentwicklung verbunden sein können.

Rupfen kann beispielsweise durch Zwangserregung - etwa durch verschiedene Fehler im Kupplungssystem - oder aber durch Selbsterregung entstehen. Ursache eines selbsterregten Rupfens ist beispielsweise eine Änderung des Reibwerts in Abhängigkeit von der Gleitgeschwindigkeit. Zwangserregtes Rupfen ist in der Regel die Folge einer äußeren Erregerquelle mit periodischer Anregung.

Die bisher bekannten Abhilfemaßnahmen zum Reduzieren des Rupfens, insbesondere während des Anfahrvorgangs von Fahrzeugen, zielen auf eine Reduzierung dieser genannten Ursachen. Hierzu ist beispielsweise bekannt geworden, entsprechend modifizierte Reibbeläge zu verwenden, die physikalische und chemische Charakteristika aufweisen, die die Anfälligkeit für Rupfen möglichst reduzieren. Weiterhin ist es bekannt, weichere Belagfedem in der Kupplungsscheibe zu verwenden. Auch mit Hilfe einer weiteren Einengung von Fertigungstoleranzen ist bisher versucht worden, das Problem des Rupfens in den Griff zu bekommen. Schließlich ist es auch bekannt, durch eine hohe Dämpfung im Antriebsstrang ein Rupfen zumindest zu reduzieren.

Die bisher bekannten Lösungen haben jedoch den Nachteil, dass sie oftmals kostenintensiv und konstruktiv aufwendig sind. Weiterhin ist mit Hilfe der bisher bekannten Lösungsansätze eine befriedigende und prozesssichere Beseitigung des Rupfens nicht immer zu erreichen.

In anderem Zusammenhang sind zur Reduzierung von Lastwechselschwingungen in einem Antriebsstrang bereits verschiedene Lösungsvorschläge bekannt geworden.

So ist beispielsweise in der DE 36 16 768 ein Verfahren zum Betrieb einer Kupplung beschrieben, bei dem eine Drehmasse innerhalb des Antriebsstrangs eines Kraftfahrzeugs mit Brennkraftmaschine zur Dämpfung niederfrequenter Lastwechselschwingungen zu oder abgeschaltet werden kann. Über eine Steuereinrichtung kann entweder durch Erfassen der Motordrehzahl oder der Bewegung der Kraftstoffzumesseinrichtung für den Motor ein Startpunkt für Umschaltvorgänge für die Kupplung festgelegt werden. Durch den Startvorgang wird eine Drehmasse mehrmals gegensinnig zur Lastwechseleinrichtung zu bzw. abgeschaltet, wodurch die niederfrequenten Lastwechselschwingungen in kürzester Zeit abklingen.

Aus der DE 100 35 521 ist ein Verfahren sowie eine Vonichtung zur Reduzierung von Lastwechselschwingungen im Antriebsstrang eines Kraftfahrzeugs bekannt. Die im Antriebsstrang des Kraftfahrzeugs auftretenden Lastwechselschwingungen werden reduziert, indem eine Änderung eines Nutzmoments im Antriebsstrang erfasst und die Periodendauer einer Lastwechselschwingung bestimmt wird, wobei bei Beginn der Nutzmomentänderung mindestens ein zusätzlicher Momentimpuls aufgebracht wird, der eine zur Lastwechselschwingung gegenphasige Schwingung verursacht und eine halbe Periodendauer der Lastwechselschwingung andauert.

Die im Zusammenhang mit der Reduzierung von Lastwechselschwingungen bekannt gewordenen Lösungen lassen sich jedoch nicht ohne Weiteres auf das Phänomen des Rupfens übertragen.

Aus der DE 101 17 745 A1 ist eine Kupplungsbaugruppe bekannt, bei der die Kupplungsscheibe neben einem Dämpfer mit einer in Reihe hierzu geschalteten Rutschkupplung gekoppelt ist um so Energie aus einer Rupfschwingung umzuwandeln.

Der vorliegenden Erfindung liegt daher die Aufgabe zugrunde, einen Antriebsstrang der eingangs genannten Art derart weiterzubilden, dass auftretenden Rupfschwingungen auf einfache Weise möglichst vollständig reduziert werden können.

Diese Aufgabe wird erfindungsgemäß gelöst mit den Merkmalen gemäß dem unabhänglgen Patentanspruch 1. Weitere Vorteile, Merkmale, Details, Aspekte und Effekte der Erfindung ergeben sich aus den Unteransprüchen, der Beschreibung sowie den Zeichnungen.

Der vorliegenden Erfindung liegt die Erkenntnis zugrunde, dass unter Verwendung eines einfachen Schwingungssystems, das auf einen konkreten rupfempfindlichen Antriebsstrang abgestimmt wird, durch eine der Anpresskraft der Kupplung überlagerte mit Rupffrequenz schwankende Kraft der Verlauf der Anpresskraft so abgewandelt werden kann, dass eine Anfangsschwingung sich nicht zum Rupfen aufschaukelt, sondern wieder abklingt.

Es wird nunmehr die entstehende Rupfschwingung selbst genutzt, um ein dafür ausgelegtes Schwingungssystem anzuregen. Hierdurch wird das Aufschaukeln einer Anfangserregung verhindert und ein Abklingen bewirkt.

Erfindungsgemäß weist die in einem solchen Anbiebsstrang befindliche Kupplung ein Ausrücksystem auf und das Schwingungssystem ist Über das Anbindungssystem an dem Ausrücksystem angebunden. Die mit Rupffrequenz schwankenden Kräfte des Schwingungssystems können den durch das Ausrücksystem auf die Kupplung wirkenden Kräften hinzugefügt werden.

Dabei ist das Schwingungssysbem vorzugsweise derart ausgelegt dass die verbleibende Schwankung des Übertragungsmoments von der Kupplung von einer kritischen Phasenbeziehung zu einem Vergleichsmoment abweicht. Bei dem Vergleichsmoment kann es sich beispielsweise um das Reifenmoment handeln, wie beispielsweise bereits im Rahmen der Beschreibungseinleitung erläutert worden ist. Eine sinusförmige Momentschwankung eines Kupplungsübertragungsmoments führt dann zu einem sich aufschaukelnden Rupfen, wenn diese Momentenschwankung an der Erregungsstelle der maximalen Momentenschwankung im Schwingungsknoten (beispielsweise Reifenmoment) um einen kritischen Wert voreilt, der etwa bei 90° liegt. Bei einer solchen Phasenlage wird dem Gesamtsystem mit jeder Schwingung Energie zugeführt. Dies tritt insbesondere bei Eigenfrequenzen auf. Dabei ist es unerheblich, ob es sich um eine Zwangserregung mit Rupffrequenz handelt, oder ob es sich um eine Selbsterregung handelt, bei der sich die Rupffrequenz automatisch einstellt. Diesbezüglich sei generell darauf hingewiesen, dass sich die Phasenverschiebungen zwischen den Momenten im eingeschwungenen schwingungsannen System bei 0° oder 180° bewegen.

Zur Durchführbarkeit des erfindungsgemäßen Verfahrens ist es nicht unbedingt nötig, dass die wie vorstehend beschriebene Zusammenführung der Kräfte zu einem konstanten Übertragungsmoment an der Kupplung führt. Vielmehr muss die verbleibende Schwankung des Übertragungsmoments lediglich deutlich von der beschriebenen kritischen Phasenbeziehung abweichen.

Besonders vorteilhaft ist das Schwingungssystem derart ausgelegt, dass die verbleibende Schwankung des Übertragungsmoments von der Kupplung zu dem Vergleichsmoment eine Phasenverschiebung von 180° erreicht. Hierdurch wird das Aufschaukeln einer Anfangserregung besonders vorteilhaft verhindert und ein Abklingen bewirkt.

Es kann beispielsweise vorgesehen sein, dass das Anbindungssystem wenigstens zwei, vorzugsweise drei Anbindungspunkte aufweist. Mit einem der Anbindungspunkte kann das Anbindungssystem beispielsweise mit der Kupplung verbunden sein. Wenn die Kupplung ein Ausrücksystem aufweist kann der Anbindungspunkt vorzugsweise an dem Ausrücksystem, etwa an dem Ausrücker oder dergleichen vorgesehen sein. Das Schwingungssystem ist dann über das Anbindungssystem mit der Kupplung, bzw. dem Ausrücksystem verbunden.

Weiterhin kann vorgesehen sein, dass einer der Anbindungspunkte einem an der Rupfschwingung beteiligten Bauteil, beispielsweise am Motorblock oder dergleichen, vorgesehen ist. In einem solchen Fall kann das Schwingungssystem über das Anbindungssystem an dem betreffenden Bauteil angebunden werden.

Weiterhin kann vorgesehen sein, dass das Anbindungssystem über wenigstens einen Anbindungspunkt mit dem Schwingungssystem verbunden ist.

Die Anbindungspunkte ermöglichen verschiedene Übersetzungen zu dem Schwingungssystem. Dabei kann eine Übersetzung mit negativem Vorzeichen eine Kraftumkehr bzw. eine Phasenverschiebung von 180° bewirken. Grundsätzlich ist es ausreichend, wenn das Anbindungssystem lediglich am Schwingungssystem und an der Kupplung befestigt ist.

Die Erfindung ist nicht auf bestimmte Ausgestaltungsformen für das Anbindungssystem beschränkt. Beispielsweise, jedoch nicht ausschließlich, kann das Anbindungssystem zur Ankopplung wenigstens ein mechanisches und/oder hydraulisches Element aufweisen. Bei den mechanischen Elementen kann es sich beispielsweise um Hebel oder dergleichen handeln. Wenn die Ankopplung über einen Hebel erfolgt, kann dies je nach Auswahl der Lagerpunkte für die auftretenden Federkräfte zu einer Phasenverschiebung von 0° oder 180° führen. Hydraulische Elemente zur Verwendung im Anbindungssystem umfassen beispielsweise Kolben, Leitungen und dergleichen.

Die in einem solchen System vorgesehene Masse wird dann vorteilhafterweise in einer Weise geführt, sodass sie parallel zur auftretenden Rupfbewegung schwingen kann.

Weiterhin kann das Schwingungssystem beispielsweise wenigstens ein Federelement und/oder wenigstens ein Dämpfungselement aufweisen. Diese Elemente können beispielsweise zwischen der Masse und dem entsprechenden Anbindungspunkt - vorgesehen sein. Die Elemente werden vorzugsweise momentabhängig von der Relativgeschwindigkeit dimensioniert und ausgebildet. Die Abstimmung der genannten Elemente führt vorteilhafterweise zu einer geeigneten Amplituden- und Phasenbeziehung bei der Rupffrequenz. Natürlich ist es auch möglich, dass das Schwingungssystem ohne Feder- und Dämpfungselemente an der Kupplung angebunden wird.

Vorteilhaft können Mittel zur Trennung des Schwingungssystems von der Kupplung vorgesehen sein. Über derartige Mittel ist es möglich, dass das Schwingungssystem zumindest zeitweilig von der Kupplung abgekoppelt werden kann. Dies kann beispielsweise sinnvoll sein, wenn nach einem Anfahrvorgang der Kraftfluss zur Kupplung getrennt werden soll, um irgendwelche unerwünschten Effekte im Fahrbetrieb zu vermeiden.

Das als Teil der Erfindung beschriebene System zum Moderzieren von Rupfschwingungen kann bereits bei der Herstellung eines Antriebsstrangs in diesem eingebaut werden. Ebenso ist es auf besonders einfache und kostengünstige Weise möglich, ein solches System separat herzustellen, und beispielsweise als Nachrüstsatz zu einem späteren Zeitpunkt in dem Antriebsstrang zu integrieren. Das System weist nämlich auch den Vorteil auf, dass es besonders platzsparend realisiert werden kann.

In weiterer Ausgestaltung kann der Antriebsstrang wenigstens ein weiteres an der Rupfschwingung beteiligtes Bauteil aufinreisen, bei dem es sich beispielsweise um einen Motorblock oder dergleichen handeln kann. In einem solchen Fall kann das Schwingungssystem über das Anbindungssystem vorzugsweise auch an dem wenigstens einen an der Rupfschwingung beteiligten Bauteil angebunden sein.

Durch die vorliegenden Erfindung wird es auf besonders einfache und effiziente Weise möglich, ein Auftreten von Rupfschwingungen, beispielsweise das Auftreten von Anfahrrupfschwingungen, durch Änderung der Anpresskraft mittels eines durch die Rupfschwingung angeregten Schwingungssystems, beispielsweise einem Einmassenschwinger, zu reduzieren.

Die Erfindung wird nun anhand von Ausführungsbeispielen unter Bezugnahme auf die beiliegenden Zeichnungen näher erläutert. Es zeigen:
- Figur 1: das Modellschaubild eines erfindungsgemäßen Antriebsstrangs, an dem das erfindungsgemäße Verfahren durchgeführt wurde;
- Figur 2: Diagramme einer Vergleichsrechnung eines Ausgangssystems, das trotz Schwankung des Übertragungsmoments einer Kupplung mit Rupffrequenz kein aufschaukelndes Rupfen zeigt;
- Figuren 3 und 4: Diagramme einer Simulation mit einem bei steigender Gleitgeschwindigkeit fallenden Reibwert, wobei insbesondere die Selbsterregung und die Wirksamkeit des Schwingungssystems deutlich gemacht werden; und
- Figuren 5 und 6: Diagramme, die eine Simulation mit in Fahrtrichtung weicher Motoraufhängung zeigen.

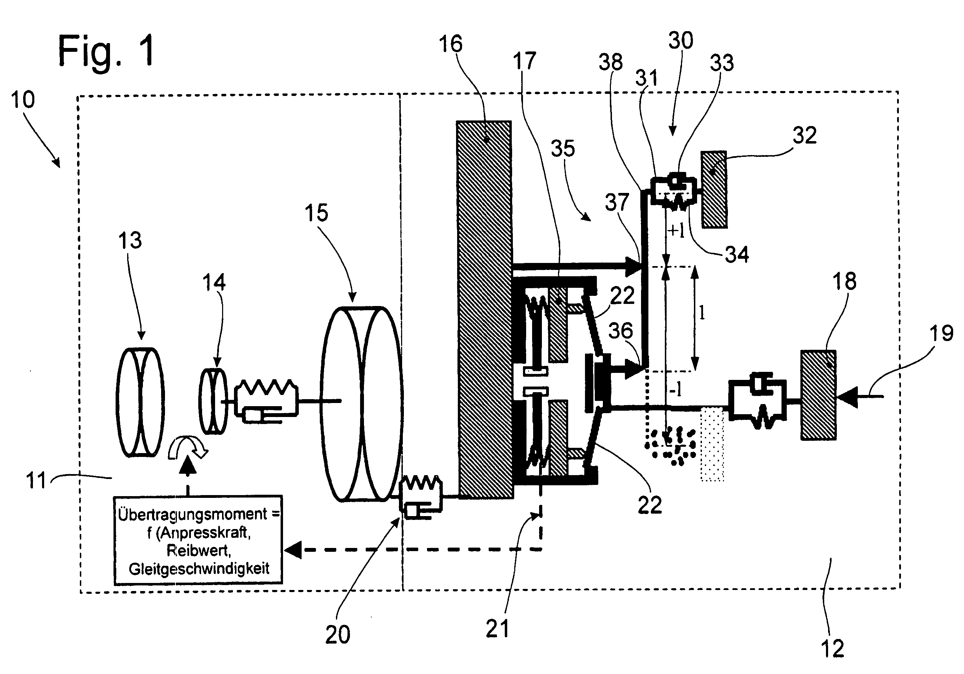

In Figur 1 ist allgemein das Modell eines Antriebsstrangs 10 für ein Fahrzeug, beispielsweise ein Kraftfahrzeug dargestellt, der einen rotatorischen Modellteil 11 sowie einen translatorischen Modellteil 12 aufweist. Der rotatorische Modellteil 11 weist die Komponenten Motor 13, Kupplungsscheibe 14 sowie Getriebe 15 auf. Der translatorische Modellteil 12 weist als Komponenten den Motor 16 mit Gehäuse und Kupplungsgehäuse, eine gezogene Kupplung 17, die beispielsweise aus Belagfederkennlinie, Membranfederkennlinie, Zungensteifigkeit und zugehörigen Massen gebildet ist, sowie ein Ausrücksystem 18 mit Pedalkraft 19 auf.

Darüber hinaus weist der translatorische Modellteil 12 ein System 30 zum Reduzieren von Rupfschwingungen im Antriebsstrang 10 auf. Das System 30 verfügt zunächst über ein Schwingungssystem 31, das im vorliegenden Beispiel als Einmassenschwinger ausgebildet ist. Das Schwingungssystem 31 verfügt daher über eine Masse 32. Weiterhin weist das Schwingungssystem 31 ein Dämpfungselement 33 sowie ein Federelement 34 auf. Über das Federelement 34 und das Dämpfungselement 33 ist das Schwingungssystem 31 mit einem Anbindungssystem 35 verbunden.

Das Anbindungssystem 35 hat die Aufgabe, das Schwingungssystem 31 mit, den Bauteilen des translatorischen Modellteils 12 zu verbinden. Im vorliegenden Ausführungsbeispiel ist das Schwingungssystem 31 über einen dritten Anbindungspunkt 38 mit dem Anbindungssystem 35 verbunden. Über das Anbindungssystem 35 ist das Schwingungssystem 31 an einem ersten Anbindungspunkt 36 weiterhin mit der Kupplung 17 sowie über einen zweiten Anbindungspunkt 37 mit dem Motorblock 16 verbunden.

Das Ausrücksystem 18 gemäß Figur 1 weist eine über eine Feder mit der Kupplung 17 verbundene Masse auf. Auf diese Masse wirkt die Ausrückkraft 19.

Wie in Figur 1 weiterhin dargestellt ist, wird das als Einmassenschwinger ausgebildete Schwingungssystem 31 über eine Übersetzung, die sich wie vorstehend beschrieben an den Motorblock 16 und die Membranfederzungen der Kupplung 17 abstützt, in das gesamte System eingebunden. Je nach Ausführung der Übersetzung (+I oder -I in Figur 1) kann die Wirkungsrichtung der vom Schwingungssystem 31 auf die Zungen 22 der Kupplung 17 ausgeübten Kraft gewechselt werden.

Der rotatorische 11 und translatorische 12 Modellteil sind gemäß Figur 1 doppelt miteinander gekoppelt, nämlich über die Motoraufhängung 20 sowie die Anpresskraft 21.

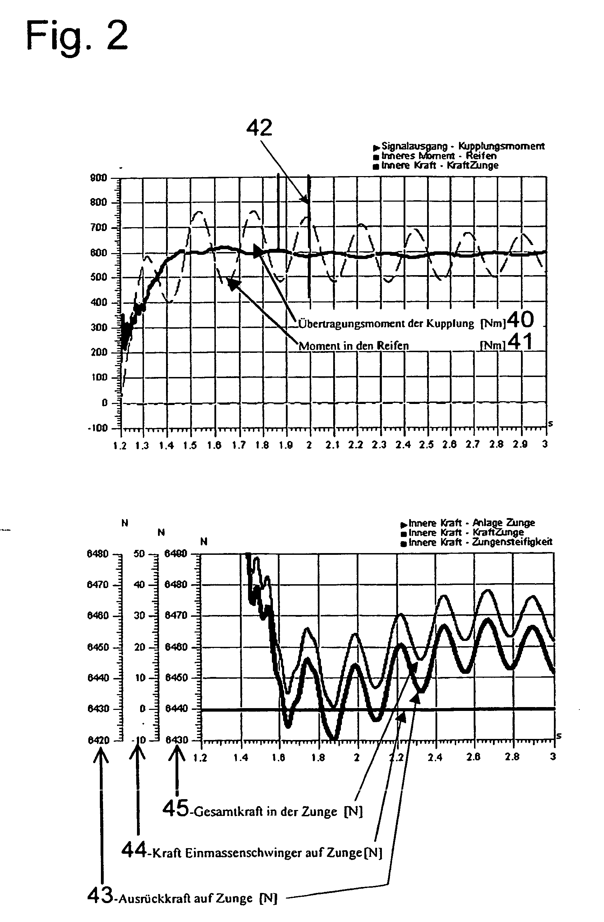

Das in Figur 1 dargestellte Modell, das zur Simulation der in den Figuren 2 bis 6 dargestellten Rupfsituationen verwendet wird, weist - noch einmal zusammenfassend - die folgenden Komponenten auf:

Zunächst ist ein Antriebstrang 10 (rotatorisch) mit Kupplung 17 und von der Gleitgeschwindigkeit abhängigem Reibwert vorgesehen. Ein Motorblock 16 (translatorisch in Fahrtrichtung) ist mit Übersetzung und Lagersteifigkeit an das Trägheitsmoment des Fahrzeugs gekoppelt. Weiterhin ist eine Kupplung 17, beispielsweise eine gezogene Kupplung, mit axialen Kräften und Massen vorgesehen. Darüber hinaus verfügt der Antriebsstrang 10 über ein Ausrücksystem 18 mit Einleitung der Pedalkraft 19. An das Ausrücksystem 18 ist ein als Einmassenschwinger ausgebildetes Schwingungssystem 31 gekoppelt, mit Übersetzung, Feder- und Dämpfungselement 33, 34. Das Schwingungssystem 31 wird zur Erzielung einer geeigneten Amplituden- und Phasenbeziehung zu seinen Ankopplungspunkten 36, 37, 38 auf einen konkreten, rupfanfälligen Antriebsstrang abgestimmt.

Die Abstimmung erfolgt dabei generell so, dass die geänderte Phasenverschiebung zwischen den Momentenschwankungen an Kupplung und Reifen ein Aufschaukeln von Rupfschwingungen verhindert.

Anhand der Figuren 2 bis 6 werden nachfolgend verschiedene Simulationsvorgänge beschrieben, mit unterschiedlichen Erregungsvarianten und Rupfunterdrückung durch das Schwingungssystem 31. Hierbei wird insbesondere das Entstehen von Rupfschwingungen während des Anfahrvorganges untersucht. Der Anfahrvorgang eines Fahrzeugs wird generell mit einem schnellen Aufbau der Anpresskraft gestartet. Dies führt in der Regel zu einer Anregung des Antriebsstrangs mit Rupffrequenz. Der weitere Rupfverlauf wird von unterschiedlichen Parametern bestimmt, von denen einige in den nachfolgenden Beispielen dargestellt sind. Das Rupfen wird generell angeregt durch die Schwankungen des Übertragungsmoments der Kupplung. Dabei wird die Stärke des Rupfens insbesondere ersichtlich aus der Schwankung des Moments an den Reifen, da dies direkt proportional zur Fahrzeugbeschleunigung ist. Bei wirksamem Schwingungssystem 31, das beispielsweise als Einmassenschwinger ausgebildet ist, wird die Gesamtkraft auf die Kupplung, beispielsweise auf das Ausrücksystem der Kupplung und hier insbesondere auf die Federzungen verändert.

In Figur 2 ist ein auftretendes Rupfen nach plötzlichem Einkuppeln dargestellt. Wie aus dem oberen Teil von Figur 2 insbesondere zu ersehen ist, sind die Schwankungen des Kupplungsübertragungsmoments 40 sowie des Moments in den Reifen 41 (Reifenmoment) gegenphasig, d. h. 180° voreilend, wie durch die Bezugsziffer 42 verdeutlicht ist.

Aus diesem Grund klingen die nach dem plötzlichen Einkuppeln auftretenden Rupfschwingungen ab, wie insbesondere aus dem Kurvenverlauf der Kurve 40 des Kupplungsübertragungsmoments deutlich wird. Ein Ansteigen der Rupfschwingungen wird unter anderem dadurch verhindert, dass der Reibwert konstant bleibt und das die Anpresskraftschwankung durch Schwingung der Anpressplatte mit Rupffrequenz bei harter Federung zwischen Fahrzeugkarosse und Motorblock (in Fahrtrichtung) zu keiner Rupfanregung führt.

Im unteren. Teil von Figur 2 sind die Kräfte auf die Membranfederzunge (Bezugsziffer 22 in Figur 1) dargestellt. Da die Masse des Schwingungssystems 31 null ist, ist die Kraft des Schwingungssystems 31 auf die Zunge 44 ebenfalls null. Weiterhin sind die Ausrückkraft 43 auf die Membranfederzungen und die Gesamtkraft 45 in den Zungen fast gleich. Ein kleiner dynamischer Unterschied wird durch die zwischen beiden Kräften liegende Zungenmasse bewirkt. Die beiden Maßstäbe im unteren Teil von Figur 2 haben einen Offset von 10 N.

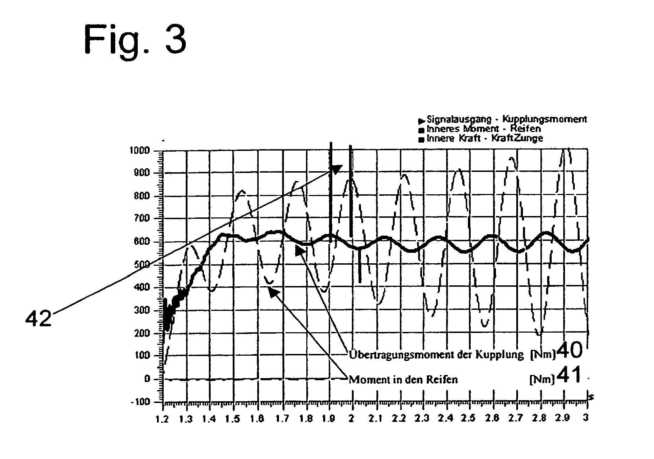

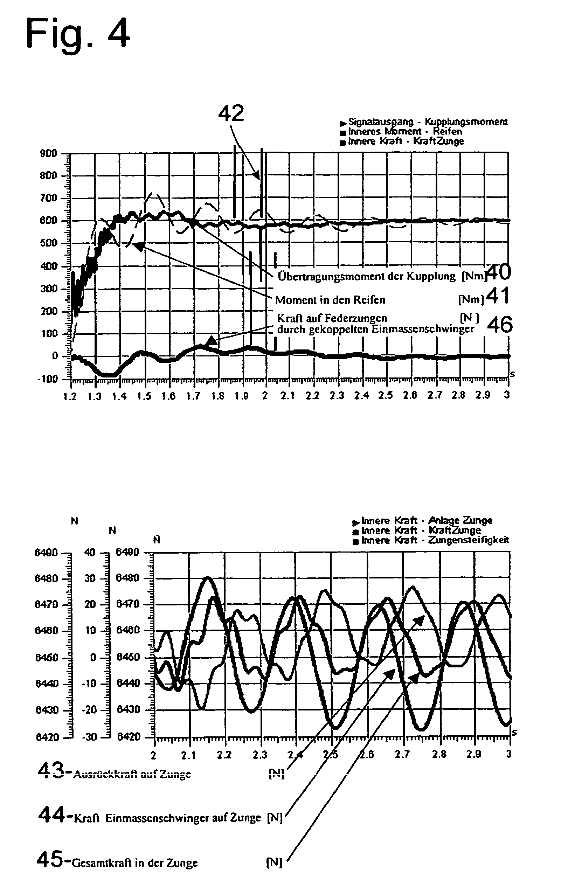

In den Figuren 3 und 4 ist eine Situation dargestellt, in der es zu einer Selbsterregung durch mit der Gleitgeschwindigkeit fallendem Reibwert kommt. Wie insbesondere aus Figur 3 zu sehen ist, eilt das Übertragungssystem 40 der Kupplung dem Reifenmoment 41 um etwa 90° vor, was durch die Bezugsziffer 42 verdeutlicht ist. Daher führt eine Anfangserregung nach einem plötzlichen Einkuppeln zu einem zunehmenden, anschwellenden Rupfen, da insbesondere der Belagreibwert mit steigender Gleitgeschwindigkeit fällt. Das zunehmende Rupfen ist insbesondere aus dem Kurvenverlauf der Kurve 40 ersichtlich.

Wie in Figur 4 dargestellt ist, entsteht durch das gekoppelte Schwingungssystem 31 wieder eine gegenphasige Schwingung ohne Rupfen. Durch das gekoppelte Schwingungssystem 31 wird auf die Kupplung, insbesondere auf die Federzungen der Kupplung eine Kraft 46 ausgeübt, die zu der durch das Ausrücksystem auf die Kupplung wirkenden Kräfte hinzugefügt wird. Auf diese Weise wird erreicht, dass das Kupplungsmoment wiederum in etwa 180° voreilend zum Reifenmoment ist, wodurch die nach dem plötzlichen Einkuppeln aufgetretene Rupfanregung erneut abklingt. Dabei ist insbesondere aus dem oberen Teil von Figur 4 zu ersehen, dass das durch die Federzungen erzeugte Moment (siehe Kurvenverlauf 46) unter 90° voreilend zum Reifenmoment (Kurvenverlauf 41) ist.

Im unteren Teil von Figur 4 sind die in diesem Fall auf die Membranfederzungen (Bezugsziffer 22 in Figur 1) herrschenden Kräfte dargestellt.

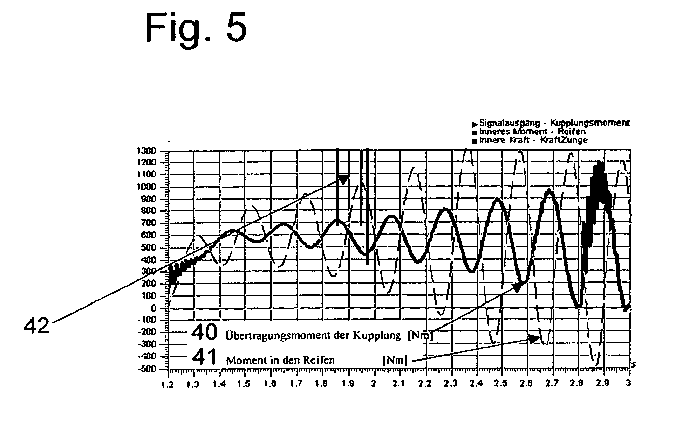

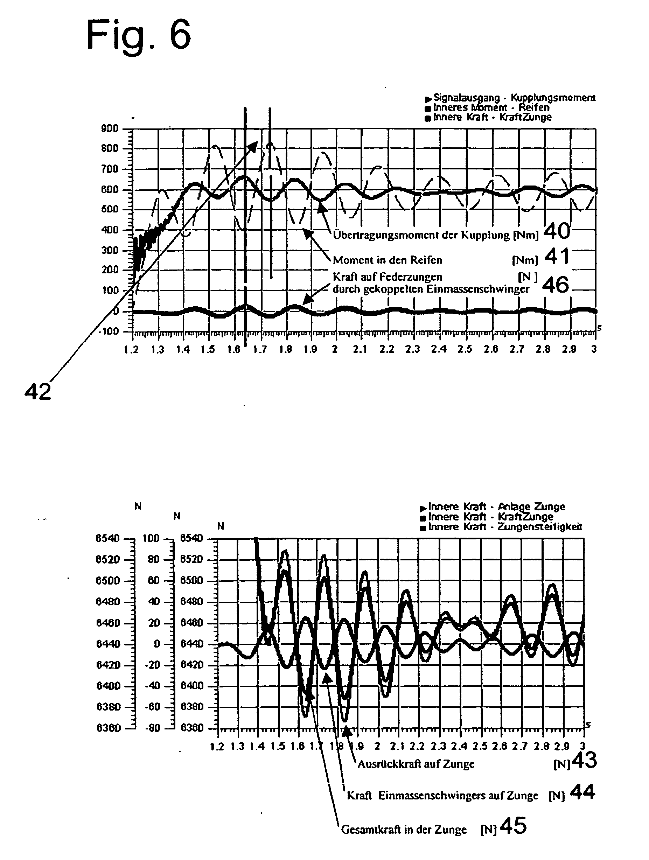

In den Figuren 5 und 6 ist eine Simulation einer Selbsterregung durch von der Rupfschwingung ausgelöste Anpresskraftschwankungen bei weicher Motoraufhängung (in Fahrtrichtung) dargestellt. Die Rupfschwingung des Motorblocks führt über die Beschleunigung der Anpressplatte zu einer Schwankung des Übertragungsmoments der Kupplung. Durch die weiche Motoraufhängung ergibt sich eine gegenüber dem in Figur 2 dargestellten Beispiel veränderte Phasenverschiebung sowie höhere Schwingungsamplituden des Motorblocks. Hierdurch stellen sich die Bedingungen für eine Selbsterregung durch die schwankende Anpresskraft ein. Dies ist insbesondere in Figur 5 dargestellt, aus der sich ebenfalls ergibt, dass der Verlauf des Kupplungsmoments (Kurve 40) gegenüber dem Verlauf des Reifenmoments (Kurve 41) über 90° voreilend ist, wie insbesondere durch Bezugsziffer 42 dargestellt ist. Das Aufschaukeln der Rupfschwingungen ergibt sich insbesondere aus dem Kurvenverlauf von Kurve 40.

Durch eine geeignete Abstimmung des gekoppelten Schwingungssystems 31, das als Einmassenschwinger ausgebildet ist, entsteht wieder eine annähernd gegenphasige Schwingung ohne Rupfen, wie insbesondere aus Figur 6 ersichtlich ist. Durch die Zuschaltung des Schwingungssystems 31 wird wiederum erreicht, dass das Übertragungsmoment der Kupplung (Kurve 40) zum Reifenmoment (Kurve 41) über 180° voreilend ist (Bezugsziffer 42). Der Grund hierfür liegt in der Hinzufügung der mit Rupffrequenz schwankenden Kräfte des Schwingungssystems 31, die durch die im oberen Teil von Figur 6 befindliche Kurve 46 dargestellt sind. Die mit Rupffrequenz schwankenden Kräfte 46 des Schwingungssystems 31 werden den durch das Ausrücksystem auf die Kupplung wirkenden Kräften hinzugefügt. Hierdurch wird das Aufschaukeln der Anfangserregung verhindert und ein Abklingen bewirkt, wie sich insbesondere aus dem Kurvenverlauf von Kurve 40 im oberen Teil von Figur 6 entnehmen lässt.

Im unteren Teil von Figur 6 sind wiederum die in diesem Fall auf die Membranfederzunge herrschenden Kräfte dargestellt.

Wie durch die verschiedenen Simulationsbeschreibungen gezeigt werden konnte, wird es mittels der vorliegenden Erfindung auf besonders einfache Weise möglich, das Anfahrrupfen durch Änderung der Anpresskraft mit durch die Rupfschwingung angeregtem Schwingungssystem zu reduzieren.

### Bezugszeichenliste

- 10: Modell eines Antriebsstrangs für ein Fahrzeug
- 11: rotatorischer Modellteil
- 12: translatorischer Modellteil
- 13: Motor
- 14: Kupplungsscheibe
- 15: Getriebe
- 16: Motorblock mit Gehäuse und Kupplungsgehäuse
- 17: Kupplung
- 18: Ausrücksystem
- 19: Pedalkraft
- 20: Motoraufhängung
- 21: Anpresskraft
- 22: Federzunge
- 30: System zum Reduzieren von Rupfschwingungen
- 31: Schwingungssystem (Einmassenschwinger)
- 32: Masse
- 33: Dämpfungselement
- 34: Federelement
- 35: Anbindungssystem
- 36: erster Anbindungspunkt
- 37: zweiter Anbindungspunkt
- 38: dritter Anbindungspunkt
- 40: Verlauf des Übertragungsmoments der Kupplung
- 41: Verlauf des Moments in den Reifen
- 42: Phasenverschiebung
- 43: Verlauf der Ausrückkraft auf die Zunge
- 44: Verlauf der Kraft des Schwingungssystems auf die Zunge
- 45: Verlauf der Gesamtkraft auf die Zunge
- 46: Verlauf der Kraft auf die Federzunge

## Patentansprüche

1. Antriebsstrang für ein Fahrzeug, mit einer Kupplung (17), und einem zumindest zeitweilig zumindest an der Kupplung (17) angebundenen System (30) zum Reduzieren von Rupfschwingungen im Antriebsstrang (10) des Fahrzeugs welches angebundene System (30) ein als Einmassenschwinger ausgebildetes Schwingungssystem (31) umfast, das zum Schwingen mit Rupffrequenz ausgelegt ist sowie ein Anbindungssystem (35) zur Anbindung des Schwingungssystems (31) an die Kupplung (17) und zur Übertragung der mit Rupffrequenz schwankenden Kräfte des Schwingungssystems (31) an die Kupplung (17),
**dadurch gekennzeichnet,**
**daß** die Kupplung (17) ein Ausrücksystem (18) aufweist und dass das Schwingungssystem (31) über das Anbindungssystem (35) an dem Ausrücksystem (18) angebunden ist.

2. Antriebsstrang nach Anspruch 1, **dadurch gekennzeichnet daß** das Anbindungssystem (35) wenigstens zwei, vorzugsweise drei Anbindungspunkte (36, 37, 38) aufweist.

3. Antriebsstrang nach Anspruch 1 oder 2, **dadurch gekennzeichnet, daß** das Anbindungssystem (35) über wenigstens einen Anbindungspunkt (38) mit dem Schwingungssystem (31) verbunden ist.

4. Antriebsstrang nach einem der Ansprüche 1 bis 3, **dadurch gekennzeichnet, daß** das Anbindungssystem (35) zur Ankopplung wenigstens ein mechanisches und/oder hydraulisches Element aufweist.

5. Antriebsstrang nach Anspruch 1, **dadurch gekennzeichnet, daß** die Masse (32) des Einmassenschwingers in einer Weise geführt ist, daß sie parallel zu einer auftretenden Rupfbewegung schwingen kann.

6. Antriebsstrang nach einem der Ansprüche 1 bis 5, **dadurch gekennzeichnet, daß** das Schwingungssystem (31) wenigstens ein Federelement (34) und/oder wenigstens ein Dämpfungselement (33) aufweist.

7. Antriebsstrang nach einem der Ansprüche 1 bis 6, **dadurch gekennzeichnet, daß** Mittel zur Trennung des Schwingungssystems (31) von der Kupplung (17) vorgesehen sind.

8. Antriebsstrang nach Anspruch 1. **dadurch gekennzeichnet, daß** dieser wenigstens ein weiteres an der Rupfschwingung beteiligtes Bauteil (16) aufweist und dass das Schwingungssystem (31) über das Anbindungssystem (35) an dem wenigstens einen an der Rupfschwingung beteiligten Bauteil (16) angebunden ist.

9. Verfahren zum Reduzieren von Rupfschwingungen in einem Antriebsstrang eines Fahrzeugs, insbesondere während eines Anfahrvorgangs, mit den Merkmalen des Anspruches 1,
**dadurch gekennzeichnet, daß** das Schwingungssystem durch die Rupfschwingungen zum Schwingen mit Rupffrequenz angeregt wird und daß die mit Rupffrequenz schwankenden Kräfte des Schwingungssystems auf die Kupplung (17) übertragen werden.

10. Verfahren nach Anspruch 9, **dadurch gekennzeichnet, daß** die Kupplung (17) ein Ausrücksystem (18) aufweist und daß die mit Rupffrequenz schwankenden Kräfte des Schwingungssystems den durch das Ausrücksystem (18) auf die Kupplung (17) wirkenden Kräften hinzugefügt werden.

11. Verfahren nach Anspruch 9 oder 10, **dadurch gekennzeichnet, daß** das Schwingungssystem derart ausgelegt ist, daß die verbleibende Schwankung des Übertragungsmoments von der Kupplung (17) von einer kritischen Phasenbeziehung zu einem Vergleichsmoment abweicht.

12. Verfahren nach Anspruch 9, **dadurch gekennzeichnet, daß** das Schwingungssystem so ausgelegt ist, dass die verbleibende Schwankung des Übertragungemoments von der Kupplung (17) zu dem Vergleichsmoment eine Phasenverschiebung von 180° erreicht.

## Claims

1. Drive train for a vehicle, having a clutch (17) and a system (30) which is attached at least temporarily at least to the clutch (17) for reducing juddering vibrations in the drive train (10) of the vehicle, which attached system (30) comprises a vibration system (31) which is configured as a single-mass vibrator and is designed to vibrate at the juddering frequency, and also comprises an attachment system (35) for attaching the vibration system (31) to the clutch (17) and for transmitting the forces of the vibration system (31) which vary at the juddering frequency to the clutch (17), **characterized in that** the clutch (17) has a disengagement system (18), and **in that** the vibration system (31) is attached to the disengagement system (18) via the attachment system (35).

2. Drive train according to Claim 1, **characterized in that** the attachment system (35) has at least two, preferably three, attachment points (36, 37, 38).

3. Drive train according to Claim 1 or 2, **characterized in that** the attachment system (35) is connected to the vibration system (31) via at least one attachment point (38).

4. Drive train according to one of Claims 1 to 3, **characterized in that** the attachment system (35) has at least one mechanical and/or hydraulic element for coupling purposes.

5. Drive train according to Claim 1, **characterized in that** the mass (32) of the single-mass vibrator is guided in such a way that it can vibrate in parallel with a juddering movement which occurs.

6. Drive train according to one of Claims 1 to 5, **characterized in that** the vibration system (31) has at least one spring element (34) and/or at least one damping element (33).

7. Drive train according to one of Claims 1 to 6, **characterized in that** means are provided for separating the vibration system (31) from the clutch (17).

8. Drive train according to Claim 1, **characterized in that** it has at least one further component (16) which participates in the juddering vibration, and **in that** the vibration system (31) is attached via the attachment system (35) to the at least one component (16) which participates in the juddering vibration.

9. Method for reducing juddering vibrations in a drive train of a vehicle, in particular during a starting-up procedure, having the features of Claim 1, **characterized in that** the vibration system is excited by the juddering vibrations to vibrate at the juddering frequency, and **in that** those forces of the vibration system which vary at the juddering frequency are transmitted to the clutch (17).

10. Method according to Claim 9, **characterized in that** the clutch (17) has a disengagement system (18), and **in that** those forces of the vibration system which vary at the juddering frequency are added to the forces which act on the clutch (17) via the disengagement system (18).

11. Method according to Claim 9 or 10, **characterized in that** the vibration system is designed in such a way that the remaining variation in the transmission moment from the clutch (17) differs from a critical phase relation to a comparison moment.

12. Method according to Claim 9, **characterized in that** the vibration system is designed in such a way that the remaining variation in the transmission moment from the clutch (17) achieves a phase shift of 180° with respect to the comparison moment.

## Revendications

1. Chaîne cinématique pour un véhicule, avec un embrayage (17), et avec un système (30) qui est rattaché au moins temporairement au moins à l'embrayage (17) et qui est destiné à réduire les vibrations de broutage dans la chaîne cinématique (10) du véhicule, lequel système rattaché (30) comprend un système vibrant (31) réalisé sous forme de système vibrant monomasse qui est conçu pour vibrer à la fréquence de broutage, et un système de rattachement (35) pour rattacher le système vibrant (31) à l'embrayage (17) et pour transmettre à l'embrayage (17) les forces, qui fluctuent à la fréquence de broutage, du système vibrant (31),
**caractérisée en ce que** l'embrayage (17) présente un système de débrayage (18), et **en ce que** le système vibrant (31) est rattaché par l'intermédiaire du système de rattachement (35) au système de débrayage (18).

2. Chaîne cinématique selon la revendication 1, **caractérisée en ce que** le système de rattachement (35) présente au moins deux et de préférence trois points de rattachement (36, 37, 38).

3. Chaîne cinématique selon la revendication 1 ou 2, **caractérisée en ce que** le système de rattachement (35) est relié au système vibrant (31) par l'intermédiaire d'au moins un point de rattachement (38).

4. Chaîne cinématique selon l'une quelconque des revendications 1 à 3, **caractérisée en ce que** le système de rattachement (35) présente pour l'accouplement au moins un élément mécanique et/ou hydraulique.

5. Chaîne cinématique selon la revendication 1, **caractérisée en ce que** la masse (32) du système vibrant monomasse est guidée de telle sorte qu'elle peut vibrer parallèlement à un mouvement de broutage qui apparaît.

6. Chaîne cinématique selon l'une quelconque des revendications 1 à 5, **caractérisée en ce que** le système vibrant (31) présente au moins un élément de ressort (34) et/ou au moins un élément d'amortissement (33).

7. Chaîne cinématique selon l'une quelconque des revendications 1 à 6, **caractérisée en ce que** des moyens sont prévus pour séparer le système vibrant (31) de l'embrayage (17).

8. Chaîne cinématique selon la revendication 1, **caractérisée en ce qu'**elle présente au moins un élément supplémentaire (16) participant à la vibration de broutage, et **en ce que** le système vibrant (31) est rattaché par l'intermédiaire du système de rattachement (35) à l'élément au moins unique (16) participant à la vibration de broutage.

9. Procédé pour réduire, notamment pendant un processus de démarrage, les vibrations de broutage dans une chaîne cinématique d'un véhicule ayant les caractéristiques de la revendication 1, **caractérisé en ce que** le système vibrant est excité par les vibrations de broutage pour vibrer à la fréquence de broutage, et **en ce que** les forces, qui fluctuent à la fréquence de broutage, du système vibrant sont transmises à l'embrayage (17).

10. Procédé selon la revendication 9, **caractérisé en ce que** l'embrayage (17) présente un système de débrayage (18), et **en ce que** les forces, qui fluctuent à la fréquence de broutage*,* du système vibrant sont ajoutées aux forces qui sont exercées par le système de débrayage (18) sur l'embrayage (17).

11. Procédé selon la revendication 9 ou 10, **caractérisé en ce que** le système vibrant est conçu de telle sorte que la fluctuation restante du couple de transmission de l'embrayage (17) diffère d'une relation de phases critique par rapport à un couple de référence.

12. Procédé selon la revendication 9, **caractérisé en ce que** le système vibrant est conçu de telle sorte que la fluctuation restante du couple de transmission de l'embrayage (17) atteigne un déphasage de 180° par rapport au couple de référence.
